# EUROPÄISCHE PATENTANMELDUNG

(11) **EP 2 765 628 A1**
(43) Veröffentlichungstag der Anmeldung: **13.08.2014**
(21) Anmeldenummer: 13154406.6
(22) Anmeldetag: 07.02.2013
(51) Int. Cl.: H01M 2/10, H01M 10/42, H01M 10/48, H01M 10/0525

(54) **Batteriesystem und Verfahren zur Herstellung eines Batteriesystems**

(71) Anmelder: MAGNA STEYR Battery Systems GmbH & Co OG, 8041 Graz (AT)
(72) Erfinder: FAULAND, David, 8522 Groß St. Florian (AT)
(74) Vertreter: Rausch, Gabriele

(57) **Zusammenfassung**

Batteriesystem, umfassend eine Vielzahl von Zellen (1), eine Vielzahl von Zellverbindern (2) durch welche die Zellen (1) elektrisch leitend miteinander verbunden sind, zumindest eine Elektronikeinheit (4), und zumindest einen Bonddraht (3) aus Aluminium, wobei die Elektronikeinheit (4) dazu eingerichtet ist die Spannung zumindest einzelner Zellen (1) zu erfassen und Kontaktelemente (4.1) aus Kupfer zur Erfassung der Spannungspotentiale der Zellen (1) aufweist, wobei durch den Bonddraht (3) eine elektrisch leitende Verbindung zwischen einem der Zellverbinder (2) und einem der Kontaktelemente (4.1) hergestellt ist, wobei auf dem Kontaktelement (4.1) ein durch ein Lötverfahren befestigtes erstes Zwischenelement (5) angeordnet ist, wobei das erste Zwischenelement (5) einen ersten Abschnitt (5.1) aus Kupfer und einen zweiten Abschnitt (5.2) aus Aluminium aufweist, und wobei der Bonddraht (3) auf dem zweiten Abschnitt (5.2) des ersten Zwischenelements (5) im Ultraschall-Bond-Verfahren kontaktiert ist.

## Beschreibung

Die vorliegende Erfindung betrifft ein Batteriesystem, umfassend eine Vielzahl von Zellen, eine Vielzahl von Zellverbindern durch welche die Zellen elektrisch leitend miteinander verbunden sind, zumindest eine Elektronikeinheit, und zumindest einen Bonddraht aus Aluminium, wobei die Elektronikeinheit dazu eingerichtet ist die Spannung zumindest einzelner Zellen zu erfassen und Kontaktelemente aus Kupfer zur Erfassung der Spannungspotentiale der Zellen aufweist, wobei durch den Bonddraht eine elektrisch leitende Verbindung zwischen einem der Zellverbinder und einem der Kontaktelemente hergestellt ist.

Batteriesysteme mit einer Vielzahl von Zellen werden insbesondere als Energiespeicher in Kraftfahrzeugen eingesetzt, beispielsweise für den Antrieb von Elektro- und Hybridfahrzeugen.

Insbesondere bei Batteriesystemen mit Lithium-Ionen-Zellen ist eine Überwachung der einzelnen Zellen hinsichtlich ihrer Spannung erforderlich, da produktionsbedingte Unterschiede der Zellen zu unterschiedlichen Ladezuständen derselben führen. Bei einer Ladung des Batteriesystems werden einzelne Zellen daher stärker oder weniger stark geladen, das gleiche gilt bei einem Entladevorgang des Batteriesystems. Besonders eine überhöhte Ladung oder die Belastung mit einer zu hohen Spannung ist für die Zellen schädlich und kann in weiterer Folge die Lebensdauer des Batteriesystems deutlich reduzieren. Um derartigen Effekten vorzubeugen können die Ladungszustände der einzelnen Zellen aneinander angeglichen werden. Dabei wird beispielsweise elektrische Energie von Zellen mit überhöhter Ladung zu Zellen mit geringerer Ladung transferiert. Alternativ dazu wird überschüssige Ladung von Zellen mit überhöhter Ladung durch Entladewiderstände abgebaut, sodass alle Zellen einen annähernd einheitlichen Ladezustand aufweisen. Um dies zu bewerkstelligen ist Kenntnis über die Spannung der Zellen erforderlich.

Der Abgriff der Spannung der Zellen erfolgt dabei bevorzugt an Zellverbindern, durch welche die Zellen elektrisch leitend miteinander verbunden sind. Die Zellverbinder sind zumeist aus dem selben Werkstoff gefertigt wie die Ableiter der Zellen, mit denen sie verbunden sind. Bei Lithium-Ionen Zellen ist dies zumeist Aluminium und/oder Kupfer. Die Erfassung und Auswertung der an den Zellverbindern abgegriffenen Spannungspotentiale erfolgt in zumindest einer Elektronikeinheit. Die Elektronikeinheit weist Kontaktelemente auf, an denen die abgegriffene Spannung der Zellen erfasst werden kann.

Aus der WO 2012/068732 A1 ist ein Battery Pack bekannt, mit einer auf Zellen aufgelegten weichen und verformbaren Matte mit einer ersten Gruppe von Öffnungen, einem Kunststoffgitter mit einer zweiten Gruppe von Öffnungen welches auf die Matte aufgelegt ist, und ein Printed Circuit Board mit einer dritten Gruppe von Öffnungen welches auf das Kunststoffgitter aufgelegt ist, und einer Vielzahl von Ultraschall-Bonddrähte, die eine direkte Verbindung zwischen positiven und negativen Kontakten der Zellen und dem Printed Circuit Board herstellen. Neben jeder der dritten Gruppe von Öffnungen zugeordneten Öffnung sind zwei PCB-Kontaktpads auf dem Printed Circuit Board angeordnet. Ein Ultraschall-Bonddraht verbindet den positiven Kontakt einer Zelle mit dem ersten PCB-Kontaktpad, ein weiterer Ultraschall-Bonddraht verbindet den negativen Kontakt der Zelle mit dem zweiten PCB-Kontaktpad.

Bei der Anwendung derartiger Batteriesysteme in Kraftfahrzeugen ist einerseits auf eine hohe Betriebssicherheit zu achten, andererseits sollen derartiger Batteriesysteme einfach und kostengünstig in der Herstellung sein. Die im bekannten Stand der Technik vorgeschlagene Lösung weist in dieser Hinsicht den Nachteil auf, dass die verwendeten Werkstoffe unberücksichtigt bleiben. So weist beispielsweise eine Kupfer-Bonddraht-Verbindung auf Kupferoberflächen keine für den Betrieb in einem Kraftfahrzeug hinreichende Festigkeit auf. Insbesondere eine auf der KupferOberfläche vorhandende Oxidschicht verschlechtert die Anbindung erheblich. Eine auf der Kupferoberfläche zum Oxidationsschutz angeordnete Zinnschicht, wie sie beispielsweise bei der Herstellung von Leiterplatten verwendet wird, ist ebenfalls nachteilig für die Kontaktierung eines Bonddrahts, da Zinn schmierende Eigenschaften aufweist. Löst sich ein Bonddraht an der Kontaktoberfläche, so kann dieser freie Drahtabschnitt zu Kurzschlüssen innerhalb des Batteriesystems führen, und dabei die Betriebssicherheit erheblich beeinträchtigen.

Es ist eine Aufgabe der Erfindung, Batteriesysteme der genannten Art so zu verbessern, dass die Spannung einzelner Zellen sicher und zuverlässig mittels Bonddrähten abgreifbar ist, und insbesondere ein einfach und kostengünstig herstellbares Batteriesystem mit einer zuverlässigen Zellspannungserfassung anzugeben, sowie ein Verfahren zur Herstellung eines solchen Batteriesystems.

Die Lösung der Aufgabe erfolgt durch ein Batteriesystem, umfassend eine Vielzahl von Zellen, eine Vielzahl von Zellverbindern durch welche die Zellen elektrisch leitend miteinander verbunden sind, zumindest eine Elektronikeinheit, und zumindest einen Bonddraht aus Aluminium, wobei die Elektronikeinheit dazu eingerichtet ist die Spannung zumindest einzelner Zellen zu erfassen und Kontaktelemente aus Kupfer zur Erfassung der Spannungspotentiale der Zellen aufweist, wobei durch den Bonddraht eine elektrisch leitende Verbindung zwischen einem der Zellverbinder und einem der Kontaktelemente hergestellt ist, wobei auf dem Kontaktelement ein durch ein Lötverfahren befestigtes erstes Zwischenelement angeordnet ist, wobei das erste Zwischenelement einen ersten Abschnitt aus Kupfer und einen zweiten Abschnitt aus Aluminium aufweist, und wobei der Bonddraht auf dem zweiten Abschnitt des ersten Zwischenelements im Ultraschall-Bond-Verfahren kontaktiert ist.

Die Aufgabe wird auch gelöst durch ein Verfahren zur Herstellung eines derartigen Batteriesystems, umfassend die Schritte:
- Bereitstellen einer Vielzahl von Zellen,
- Herstellen einer elektrisch leitenden Verbindung zwischen den Zellen durch eine Vielzahl von Zellverbindern,
- Bereitstellen einer Elektronikeinheit die dazu eingerichtet ist die Spannung zumindest einzelner Zellen zu erfassen und Kontaktelemente aus Kupfer zur Erfassung der Spannungspotentiale der Zellen aufweist, und wobei auf zumindest einem Kontaktelement ein erstes Zwischenelemente im Lötverfahren befestigt ist, wobei das erste Zwischenelement einen ersten Abschnitt aus Kupfer und einen zweiten Abschnitt aus Aluminium aufweist,
- Kontaktieren des ersten Endes eines Bonddrahts aus Aluminium auf dem zweiten Abschnitt des ersten Zwischenelements durch das Ultraschall-Bond-Verfahren,
- Kontaktieren des zweiten Endes des Bonddrahts auf einer Aluminium-Oberfläche, die entweder Bestandteil eines der Zellverbinder oder Bestandteil eines zweiten Zwischenelements ist, welches auf einem der Zellverbinder angeordnet ist, durch das Ultraschall-Bond-Verfahren.

Erfindungsgemäß wird durch den Bonddraht aus Aluminium eine sichere und zuverlässige elektrisch leitende Verbindung zwischen dem jeweiligen Kontaktelement auf der Elektronikeinheit und dem Zellverbinder hergestellt. Die Kontaktierung von Aluminium-Bonddrähte durch das Ultraschall-Bond-Verfahren ist äußerst prozesssicher, und weist eine langlebige und zuverlässige Festigkeit auf. Das Ultraschall-Bond-Verfahren wird besonders für das Bonden von Aluminiumdrähten benutzt. Hierbei wird durch Ultraschall und Druck zunächst die Oxidschicht des Aluminiumdrahtes aufgebrochen. Das Oxid hat eine schmirgelnde Wirkung, welche die zu bondende Oberfläche reinigt und aktiviert. Im weiteren Verlauf des Bondvorgangs bewirken der Ultraschall und der Druck, dass es zu Ver- und Entfestigungsvorgängen im Drahtmaterial kommt, in deren Folge es zu Diffusionsvorgängen zwischen Draht- und Kontaktierungs-Material kommt. Daraus resultiert eine feste Verschweißung.

Das erste Zwischenelement kann bereits bei der Herstellung der Elektronikeinheit auf dem jeweiligen Kontaktelementen befestigt werden. Da der erste Abschnitt des ersten Zwischenelements ebenso wie das Kontaktelement aus Kupfer besteht, ist eine Befestigung mittels Lötverfahren einfach und zuverlässig.

Weiterbildungen der Erfindung sind in den abhängigen Ansprüchen, der Beschreibung sowie den beigefügten Zeichnungen angegeben.

Vorzugsweise besteht der Zellverbinder aus Aluminium, und der Bonddraht ist im Ultraschall-Bond-Verfahren unmittelbar auf dem Zellverbinder kontaktiert. Diese Ausführungsform ist besonders bei Lithium-Ionen-Zellen vorteilhaft, da Zellen dieses Typs zumindest kathodenseitig meist einen Ableiter aus Aluminium aufweisen. Dementsprechend sind Zellverbinder für Zellen dieses Typs meist ebenfalls aus Aluminium gefertigt, da durch den gleichen Grundwerkstoff eine einfache Verbindungstechnologie zwischen Zelle und Zellverbinder ermöglicht wird. Da der Zellverbinder im Gegensatz zum Ableiter der Zelle in der Regel gut zugänglich ist, ist eine unmittelbare Kontaktierung des Bonddrahts auf dem Zellverbinder trotz der für das Kontaktieren erforderlichen, zumeist sperrigen, Vorrichtung gut umsetzbar.

Gemäß einer weiteren Ausgestaltung der Erfindung weist der Zellverbinder einen Abschnitt aus Aluminium auf, und der Bonddraht ist im Ultraschall-Bond-Verfahren unmittelbar auf diesem Abschnitt aus Aluminium kontaktiert. Eine derartige Ausgestaltung kommt beispielsweise dann zum Einsatz, wenn der kathodenseitige Ableiter der Zelle aus Aluminium, und der anodenseitige Ableiter aus Kupfer besteht. Zellverbinder für derartige Zellen weisen häufig einen Abschnitt aus Aluminium und einen Abschnitt aus Kupfer auf, die in geeigneter Art und Weise miteinander verbunden sind. Ist der Abschnitt aus Aluminium für die zum Kontaktieren des Bonddrahts erforderlichen Vorrichtung gut zugänglich, so kann der Bonddraht unmittelbar auf dem Abschnitt aus Aluminium kontaktiert werden.

Gemäß einer Ausführungsform der Erfindung besteht der Zellverbinder zumindest abschnittsweise aus Kupfer, wobei auf diesem Abschnitt ein durch ein Lötverfahren befestigtes zweites Zwischenelement angeordnet ist, wobei das zweite Zwischenelement einen ersten Abschnitt aus Kupfer und einen zweiten Abschnitt aus Aluminium aufweist, und wobei der Bonddraht im Ultraschall-Bond-Verfahren auf dem zweiten Abschnitt des zweiten Zwischenelements kontaktiert ist. Eine derartige Ausführungsform ist besonders dann vorteilhaft, wenn der Zellverbinder keinen oder nur einen geringflächigen Abschnitt aus Aluminium aufweist. Um dennoch eine gut zugängliche Aluminium-Oberfläche zur Kontaktierung des Bonddrahts bereitzustellen, ist auf dem Kupfer-Abschnitt des Zellverbinders ein zweites Zwischenelement mit einem ersten Abschnitt aus Kupfer und einem zweiten Abschnitt aus Aluminium angeordnet. Erfindungsgemäß weist der zweite Abschnitt des zweiten Zwischenelements die gleiche Aluminium-Legierung wie der zweite Abschnitt des ersten Zwischenelements auf. Durch diese Materialauswahl reduziert sich der Testaufwand für die Kontaktierung des Bonddrahts auf den jeweiligen Abschnitten deutlich.

Unter Aluminium und Kupfer wird an dieser Stelle nicht notwendigerweise reines Aluminium, bzw. Kupfer verstanden. Vielmehr ist darunter zu verstehen, dass es sich um handelsübliche Legierungen der genannten Werkstoffe handelt, deren Hauptbestandteil Aluminium, bzw. Kupfer ist.

Die Erfindung wird im Folgenden beispielhaft unter Bezugnahme auf die Zeichnungen beschrieben.
- Fig. 1: zeigt eine schematische Darstellung des Batteriesystems.
- Fig. 2: zeigt eine Detailansicht des Batteriesystems in einer ersten Ausführungsform.
- Fig. 3: zeigt eine Detailansicht des Batteriesystems in einer zweiten Ausführungsform.
- Fig. 4: zeigt ein Flussdiagramm zum Verfahren zur Herstellung des Batteriesystems

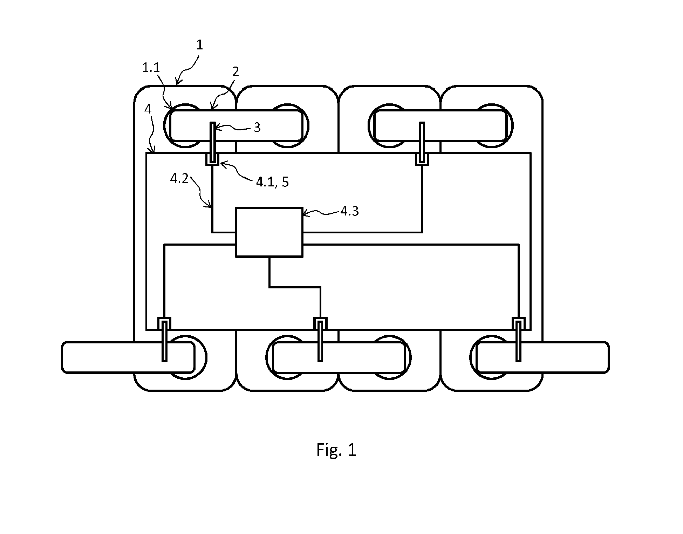

In der Fig. 1 ist eine schematische Ansicht des Batteriesystems dargestellt. Eine Vielzahl von Zellen 1 sind aneinandergereiht, und durch Zellverbinder 2 elektrisch leitend miteinander verbunden. Dazu sind die Zellverbinder 2 mit jeweils einem Ableiter 1.1 zweier benachbarter Zellen 1 elektrisch leitend verbunden. Eine auf den Zellen angeordnete Elektronikeinheit 4 weist Kontaktelemente 4.1 auf, die eine Kupferoberfläche aufweisen. Auf jedem Kontaktelement 4.1 ist jeweils ein erstes Zwischenelement 5 angeordnet. Das erste Zwischenelement 5 weist einen ersten Abschnitt 5.1 und einen zweiten Abschnitt 5.2 auf. Der erste Abschnitt 5.1 besteht aus Kupfer, der zweite Abschnitt 5.2 besteht aus Aluminium. Das erste Zwischenelement 5 ist über den ersten Abschnitt 5.1 im Lötverfahren auf dem Kontaktelement 4.1 befestigt. Ein Bonddraht 3 aus Aluminium ist auf dem zweiten Abschnitt 5.2 des ersten Zwischenelements 5 und unmittelbar auf dem Zellverbinder 2 kontaktiert. Dadurch entsteht eine elektrisch leitende Verbindung zwischen dem Zellverbinder 2 und dem Kontaktelement 4.1, wodurch das Spannungspotential am Zellverbinder 2, abzüglich des Spannungsabfalls durch den Übergangswiderstand, auf das Kontaktelement 4.1 übertragen wird. In weiterer Folge wird das derart abgegriffene Spannungspotential über eine Übertragungsleitung 4.1 an eine Signalverarbeitungseinheit 4.2 übertragen. Die Signalverarbeitungseinheit 4.2 ist dazu eingerichtet die an verschiedenen Zellverbindern 2 abgegriffenen Spannungspotentiale zu erfassen und auszuwerten.

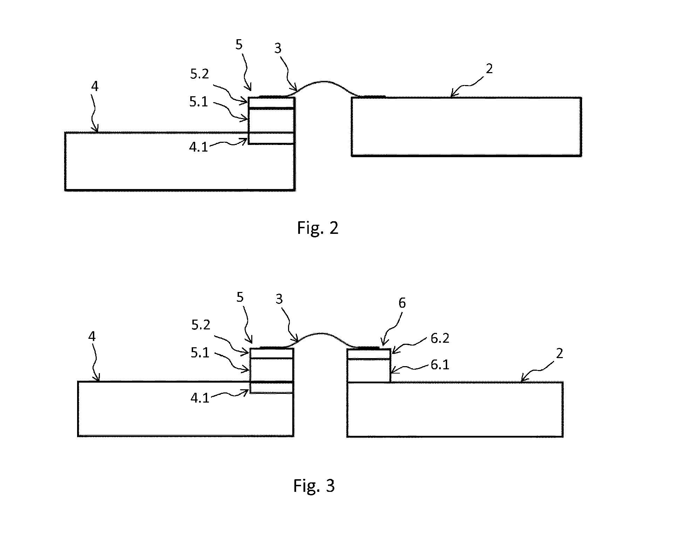

Fig. 2 zeigt eine Detailansicht des Batteriesystems in einer ersten Ausführungsform. Der darin gezeigt Zellverbinder 2 besteht aus Aluminium, oder weist zumindest einen Abschnitt aus Aluminium auf. Der Bonddraht 3 ist an seinem ersten Ende auf dem zweiten Abschnitt 5.2 des ersten Zwischenelements 5 kontaktiert, und an seinem zweiten Ende unmittelbar auf der Aluminium-Oberfläche des Zellverbinders 2. Die Kontaktierung der Enden des Bonddrahts auf dem Zellverbinder 2 und auf dem zweiten Abschnitt 5.2 des ersten Zwischenelements 5 erfolgt dabei jeweils durch das Ultraschall-Bondverfahren. Der erste Abschnitt 5.1 des ersten Zwischenelements 5 ist durch ein Lötverfahren am Kontaktelement 4.1 befestigt.

Fig. 3 zeigt eine Detailansicht des Batteriesystems in einer zweiten Ausführungsform. Der darin gezeigt Zellverbinder 2 besteht aus Kupfer, oder weist zumindest einen Abschnitt aus Kupfer auf. Der Bonddraht 3 ist an seinem ersten Ende auf dem zweiten Abschnitt 5.2 des ersten Zwischenelements 5.1 kontaktiert, und an seinem zweiten Ende auf einem zweiten Abschnitt 6.2 eines zweiten Zwischenelements 6. Der zweite Abschnitt 6.2 besteht aus Aluminium, während ein erster Abschnitt 6.1 des zweiten Zwischenelements 6 aus Kupfer besteht. Die Kontaktierung der Enden des Bonddrahts auf den jeweiligen zweiten Abschnitten 5.1, 6.1 der ersten und zweiten Zwischenelemente 5, 6 erfolgt dabei jeweils durch das Ultraschall-Bondverfahren. Der erste Abschnitt 5.1 des ersten Zwischenelements 5 ist durch ein Lötverfahren am Kontaktelement 4.1 befestigt.

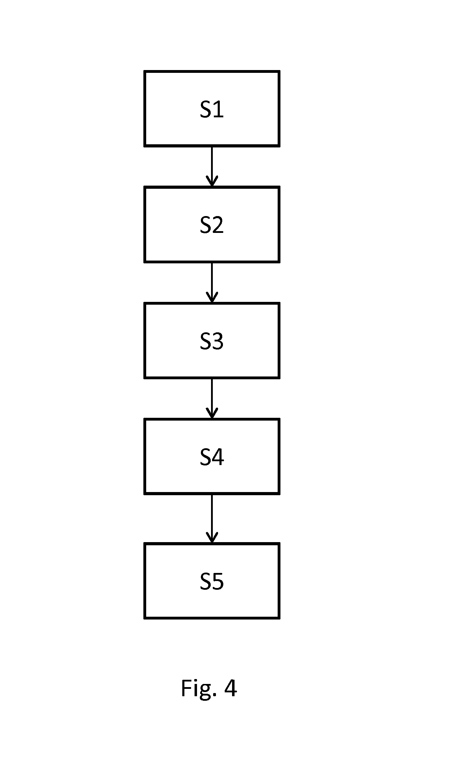

Fig. 4 zeigt ein Flussdiagramm zum Verfahren zur Herstellung des Batteriesystems. In einem ersten Schritt S1 wird eine Vielzahl von Zellen 1 bereitgestellt. In einem zweiten Schritt S2 wird durch eine Vielzahl von Zellverbindern 2 eine elektrisch leitende Verbindung zwischen den Zellen 1 hergestellt. In einem dritten Schritt S3 wird eine Elektronikeinheit 4 bereitgestellt, die dazu eingerichtet ist die Spannung zumindest einzelner Zellen 1 zu erfassen und Kontaktelemente 4.1 aus Kupfer zur Erfassung der Spannungspotentiale der Zellen 1 aufweist, und wobei auf zumindest einem Kontaktelement 4.1 ein erstes Zwischenelement 5 im Lötverfahren befestigt ist, wobei das erste Zwischenelement 5 ersten Abschnitt 5.1 aus Kupfer und einen zweiten Abschnitt 5.2 aus Aluminium aufweist. In einem vierten Schritt S4 wird das erste Endes eines Bonddrahts 3 aus Aluminium auf dem zweiten Abschnitt 5.2 des ersten Zwischenelements 5 durch das Ultraschall-Bond-Verfahren kontaktiert. In einem fünften Schritt S5 wird das zweite Ende des Bonddrahts 3 auf einer Aluminium-Oberfläche , die entweder Bestandteil eines der Zellverbinder 2 ist oder Bestandteil eines zweiten Zwischenelements 6 ist, welches auf einem der Zellverbinder 2 angeordnet ist, durch das Ultraschall-Bond-Verfahren kontaktiert.

### Bezugszeichenliste

- 1: Zelle
- 1.1: Ableiter
- 2: Zellverbinder
- 3: Bonddraht
- 4: Elektronikeinheit
- 4.1: Kontaktelement
- 4.2: Übertragungsleitung
- 4.3: Signalverarbeitungseinheit
- 5: Erstes Zwischenelement
- 5.1: Erster Abschnitt
- 5.2: Zweiter Abschnitt
- 6: Zweites Zwischenelement
- 6.1: Erster Abschnitt
- 6.2: Zweiter Abschnitt

- S1: Erster Schritt
- S2: Zweiter Schritt
- S3: Dritter Schritt
- S4: Vierter Schritt
- S5: Fünfter Schritt

## Patentansprüche

1. Batteriesystem, umfassend eine Vielzahl von Zellen (1), eine Vielzahl von Zellverbindern (2) durch welche die Zellen (1) elektrisch leitend miteinander verbunden sind, zumindest eine Elektronikeinheit (4), und zumindest einen Bonddraht (3) aus Aluminium, wobei die Elektronikeinheit (4) dazu eingerichtet ist die Spannung zumindest einzelner Zellen (1) zu erfassen und Kontaktelemente (4.1) aus Kupfer zur Erfassung der Spannungspotentiale der Zellen (1) aufweist, wobei durch den Bonddraht (3) eine elektrisch leitende Verbindung zwischen einem der Zellverbinder (2) und einem der Kontaktelemente (4.1) hergestellt ist,
**dadurch gekennzeichnet, dass** auf dem Kontaktelement (4.1) ein durch ein Lötverfahren befestigtes erstes Zwischenelement (5) angeordnet ist, wobei das erste Zwischenelement (5) einen ersten Abschnitt (5.1) aus Kupfer und einen zweiten Abschnitt (5.2) aus Aluminium aufweist, und dass der Bonddraht (3) auf dem zweiten Abschnitt (5.2) des ersten Zwischenelements (5) im Ultraschall-Bond-Verfahren kontaktiert ist.

2. Batteriesystem nach Anspruch 1,
**dadurch gekennzeichnet, dass** der Zellverbinder (2) aus Aluminium besteht, und dass der Bonddraht (3) im Ultraschall-Bond-Verfahren unmittelbar auf dem Zellverbinder (2) kontaktiert ist.

3. Batteriesystem nach Anspruch 1,
**dadurch gekennzeichnet , dass** der Zellverbinder (2) einen Abschnitt aus Aluminium aufweist, und dass der Bonddraht (3) im Ultraschall-Bond-Verfahren unmittelbar auf diesem Abschnitt kontaktiert ist.

4. Batteriesystem nach Anspruch 1,
**dadurch gekennzeichnet, dass** der Zellverbinder (2) zumindest abschnittsweise aus Kupfer besteht und auf diesem Abschnitt ein durch ein Lötverfahren befestigtes zweites Zwischenelement (6) angeordnet ist, wobei das zweite Zwischenelement (6) einen ersten Abschnitt (6.1) aus Kupfer und einen zweiten Abschnitt (6.2) aus Aluminium aufweist, und dass der Bonddraht im Ultraschall-Bond-Verfahren auf dem zweiten Abschnitt (6.2) des zweiten Zwischenelements (6) kontaktiert ist.

5. Batteriesystem nach Anspruch 4,
**dadurch gekennzeichnet, dass** der zweite Abschnitt (5.2) des ersten Zwischenelements (5) und der zweite Abschnitt (6.2) des zweiten Zwischenelements (6) die gleiche Aluminium-Legierung aufweisen.

6. Verfahren zur Herstellung eines Batteriesystems, umfassend die Schritte:
■ Bereitstellen einer Vielzahl von Zellen (1) (S1),
■ Herstellen einer elektrisch leitenden Verbindung zwischen den Zellen (1) durch eine Vielzahl von Zellverbindern (2) (S2),
■ Bereitstellen einer Elektronikeinheit (4) die dazu eingerichtet ist die Spannung zumindest einzelner Zellen (1) zu erfassen und Kontaktelemente (4.1) aus Kupfer zur Erfassung der Spannungspotentiale der Zellen (1) aufweist, und wobei auf zumindest einem Kontaktelement (4.1) ein erstes Zwischenelement (5) im Lötverfahren befestigt ist, wobei das erste Zwischenelement (5) einen ersten Abschnitt (5.1) aus Kupfer und einen zweiten Abschnitt (5.2) aus Aluminium aufweist (S3),
■ Kontaktieren des ersten Endes eines Bonddrahts (3) aus Aluminium auf dem zweiten Abschnitt (4.2) des ersten Zwischenelements (5) durch das Ultraschall-Bond-Verfahren (S4),
■ Kontaktieren des zweiten Endes des Bonddrahts (3) auf einer Aluminium-Oberfläche, die entweder Bestandteil eines der Zellverbinder (2) ist oder Bestandteil eines zweiten Zwischenelements (6) ist, welches auf einem der Zellverbinder (2) angeordnet ist, durch das Ultraschall-Bond-Verfahren (S5).
